Europäisches Patentamt

**European Patent Office**

**Office européen des brevets**

(11) Numéro de publication : **0 148 704**
**B1**

# (12) FASCICULE DE BREVET EUROPÉEN

(45) Date de publication du fascicule du brevet :
**17.08.88**

(21) Numéro de dépôt : **84402736.7**

(22) Date de dépôt : **27.12.84**

(51) Int. Cl.⁴ : **G 01 C 21/22**, F 41 G 7/22,
G 01 S 5/00

(54) **Système de surveillance par avion sans pilote permettant la localisation d'objectif.**

(30) Priorité : **06.01.84 FR 8400171**

(43) Date de publication de la demande :
**17.07.85 Bulletin 85/29**

(45) Mention de la délivrance du brevet :
**17.08.88 Bulletin 88/33**

(84) Etats contractants désignés :
**DE GB IT**

(56) Documents cités :
**FR-A- 1 603 310**
**US-A- 3 609 762**
**US-A- 3 742 495**

(73) Titulaire : **THOMSON-CSF**
**173, Boulevard Haussmann**
**F-75379 Paris Cédex 08 (FR)**

(72) Inventeur : **Losfelt, Denis**
**THOMSON-CSF SCPI - 173, bld Haussmann**
**F-75379 Paris Cedex 08 (FR)**

(74) Mandataire : **Trocellier, Roger et al**
**THOMSON-CSF SCPI 19, avenue de Messine**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un système de surveillance qui utilise un avion sans pilote de faible envergure, appelé drone, pour effectuer selon une destination principale, la localisation d'objectif. Le drone est dans ce but équipé d'un capteur vidéo d'image et de moyens de transmission hertzienne pour transmettre l'information d'image vers une station au sol pour exploitation. Le drone est télécommandé à partir de la station au sol.

La mission principale d'un tel système est la surveillance à distance de zones, en particulier de zones dangereuses dans le cadre d'applications militaires, pour y localiser des objectifs ou des cibles.

Le capteur vidéo d'image peut être une caméra de télévision, un dispositif « FLIR » (de « Forward Looking Infra-Red »), etc...

La station au sol doit être équipée d'un dispositif de mesure instantanée de la position du drone. Ce dispositif peut être constitué par un radar qui élabore les paramètres définissant le positionnement spatial relatif qui sont : la distance du drone au radar (ou l'altitude du drone), le site du drone par rapport au point radar et, le gisement du drone par rapport à une direction de référence gisement (par exemple le nord géographique) passant par ce point.

La position d'un objectif par rapport au drone nécessite de connaître, outre la position du drone par rapport à un trièdre fixe XYZ de référence, celle de la ligne de visée par rapport au drone. Les paramètres correspondant sont : l'assiette (ou tangage), le cap (ou lacet) et le roulis pour les mouvements du drone ; et pour la ligne de visée, son gisement et son site par rapport à un plan de référence lié au drone.

Dans un système de ce genre on asservit la ligne de visée correspondant au centre de l'image vidéo pour désigner l'objectif. Ceci exige un dispositif d'écartométrie équipant la station au sol ou le drone pour relever les écarts de l'objectif et les traduire ensuite en information de correction transmise par télécommande pour asservir le capteur vidéo en site et en gisement. Après centrage, l'ensemble des paramètres précités permet, à l'aide d'un calculateur, de définir la position géographique de l'objectif. Mais, la définition de cette position s'avère complexe et requiert la connaisance précise de la position géographique du dispositif de localisation, radar ou autre, utilisé, celui-ci devant avoir des performances notables pour que les erreurs de mesures introduites s'avèrent inférieures ou au plus du même ordre de grandeur que celles liées au capteur d'attitude de l'avion et de la ligne de visée.

Ces exigences sont difficiles à satisfaire aisément sans requérir une mise en œuvre complexe de matériels de grande précision et donc un coût d'équipement élevé.

Le but principal de l'invention est de remédier à ces inconvénients en mettant en œuvre un procédé de localisation différent, plus simple et plus souple d'exploitation. Un objet de l'invention est de s'affranchir du dispositif de localisation du drone et de l'asservissement par écartométrie de la ligne de visée. Ceci est réalisé selon l'invention en exploitant l'image et les paramètres transmis par le drone et en utilisant conjointement un dispositif indicateur cartographique qui présente une carte géographique incluant la zone surveillée par le drone.

Il est connu par le brevet US-A-3 609 762 un système électronique d'adaptation et de corrélation des informations entre deux dispositifs optiques de visualisation sans avoir à produire d'entraînement mécanique ou électronique d'une visualisation d'image par rapport à l'autre. Le procédé mis en œuvre consiste à échantillonner l'une et l'autre des images visualisées sous forme de signaux qui sont ensuite sommés et traités pour obtenir, par différence, un signal d'erreur représentatif des valeurs présentées par la direction de position et l'angle d'écart entre les deux images visualisées.

Ce procédé par corrélation est utilisé dans le brevet US-A-3 742 495 qui décrit un système de guidage d'un drone selon une ligne de vol désirée. Dans ce but, les lignes de la carte géographique sont corrélées pour obtenir les données d'écart en X et en Y par rapport à un point fixe. Les signaux d'écart en X et en y sont utilisés pour agir sur les propulseurs du drone et pour donner l'information de position à un moniteur de visualisation correspondant équipant une station de contrôle.

Suivant l'invention, il est proposé de réaliser un système de surveillance par drone permettant la localisation d'objectif comportant :

— ledit drone, équipé d'un capteur vidéo d'image pour détecter l'image d'une zone observée, de dispositifs détecteurs pour mesurer les paramètres définissant l'attitude du drone, son altitude et la position de la ligne de visée du capteur d'image, et de moyens d'émission-réception pour transmettre des données correspondant à cette image et à ces paramètres et pour recevoir des données relatives à la navigation du drone ;

— une station équipée de moyens d'émission-réception pour communiquer avec le drone, d'un dispositif de visualisation de l'image vidéo transmise, d'un dispositif indicateur cartographique pour représenter une carte géographique incluant la région survolée et observée par le capteur d'image, et de moyens de calcul utilisés pour le calcul de la position géographique d'un objectif en procédant au choix sur la représentation de carte géographique d'un point de repère, dit amer, également apparent sur l'image visualisée, ceci après identification préalable de l'objectif dans cette image, un moyen de désignation étant prévu pour désigner successivement, sur l'image visualisée l'amer puis l'objectif, ensuite sur la carte géographique l'amer, les calculs de localisation de l'objectif comportant les étapes principales suivantes :

— l'évaluation du site et du gisement de l'amer, puis de l'objectif, par rapport à un repère lié au drone en fonction desdits paramètres d'attitude du drone et de position de la ligne de visée du capteur d'image, et de la mesure des coordonnées du point désigné dans l'image visualisée ;

— le calcul des écarts au sol en profondeur et latéralement entre l'amer et l'objectif en fonction des évaluations précédentes et de la position spatiale de la ligne de visée ; et

— le calcul de la longitude et de la latitude de l'objectif à partir des écarts précédents, et compte-tenu que la position de l'amer est déterminée à partir des informations topographiques de la carte géographique et des coordonnées de ce point dans la carte présentée, ladite station comportant, en outre, des moyens de commande coopérant avec lesdits moyens de calcul et d'émission-réception pour émettre des données de télécommande relatives à la visée dudit capteur d'image.

Ainsi qu'on pourra s'en rendre compte par la suite, le système de surveillance proposé permet, en outre, de localiser le drone durant une phase préliminaire, ainsi que d'évaluer sa route et sa vitesse par rapport au sol, ou bien la route et la vitesse de déplacement au sol de l'objectif, dans le cas où celui-ci est mobile, ou encore, dans une application à un système de tir de contrôler et de corriger le tir.

Les particularités et avantages de la présente invention apparaîtront dans la description qui suit donnée à titre d'exemple, à l'aide des figures annexées qui représentent :

— la Fig. 1, un bloc diagramme simplifié d'un système de surveillance conforme à l'invention ;

— la Fig. 2, un diagramme d'un exemple de réalisation du système selon la Fig. 1 ;

— la Fig. 3, un schéma montrant les trièdres de référence et les relations avec ces trièdres de l'image visualisée et de la figuration au sol ;

— la Fig. 4, un schéma de cette figuration au sol dans le plan de figure ,

— la Fig. 5, un schéma relatif à la localisation du drone par le système de surveillance ; et

— la Fig. 6, un schéma relatif à la détermination de route et de vitesse du drone, ou d'un objectif, par le système de surveillance.

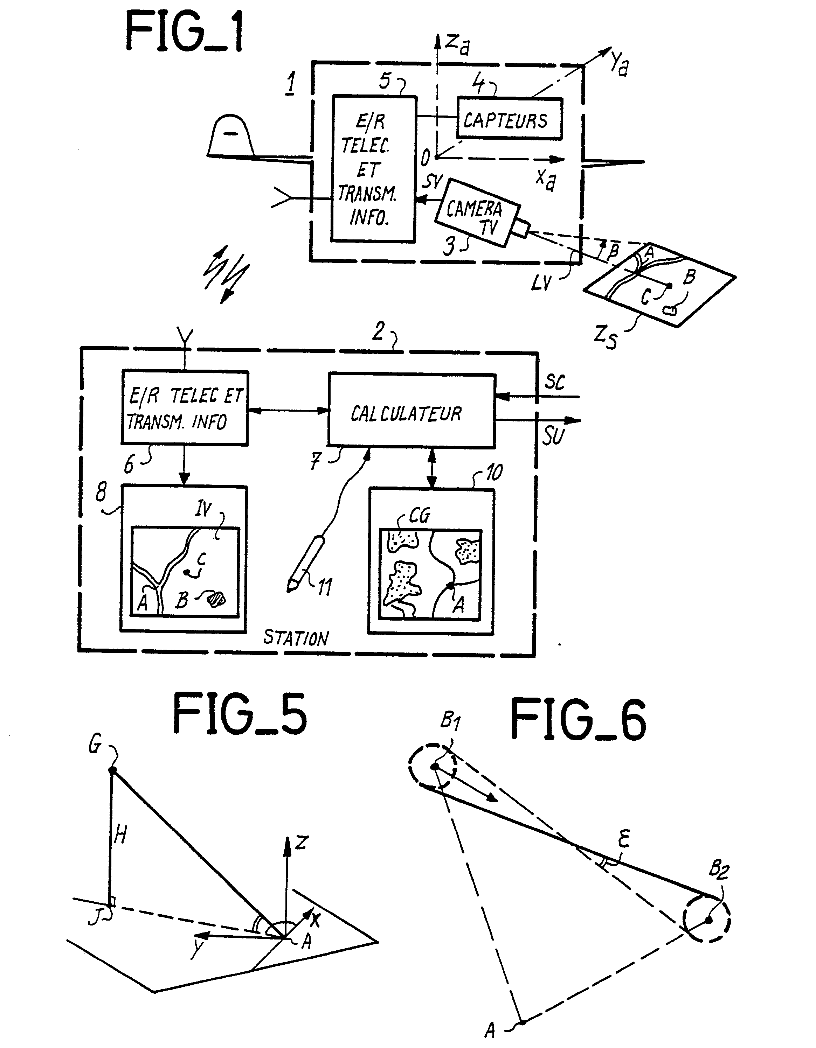

En se reportant à la Fig. 1, le système de surveillance est représenté par ses moyens essentiels dans le drone 1 et dans une station 2, généralement une station au sol, à partir duquel il est télécommandé. Le drone est équipé d'un capteur vidéo d'image 3, par exemple une caméra de télévision qui fournit le signal vidéo correspondant à l'image détectée de la zone terrestre ZS observée. Un ensemble de capteurs 4 mesure à tout moment l'attitude du drone et son altitude (ou sa distance d'éloignement au sol le long de la direction de visée). Ces paramètres sont transmis par un émetteur récepteur 5 vers la station 2.

La station 2 comporte de même un ensemble émetteur récepteur 6 pour la réception des informations paramètres et signal vidéo, un calculateur 7 et un dispositif de visualisation 8 de l'image observée.

Des signaux de commande SC provenant d'un dispositif de commande annexe à la disposition de l'opérateur sont transmis par l'intermédiaire du calculateur et de l'ensemble émetteur récepteur pour la télécommande du vol du drone (direction, vitesse, altitude, etc...) ainsi pour commander, le cas échéant, l'orientation de la ligne de visée LV et la largeur angulaire $\beta$ du champ d'observation.

Conformément à l'invention, la station 2 dispose en outre, d'un indicateur cartographique 10 pour représenter une carte géographique incluant la région ZS observée par le capteur 3, et d'un moyen de désignation 11, crayon optique ou autre, pour désigner au calculateur tel ou tel point sur l'image IV visualisée par le dispositif 8, ou sur la carte géographique CG visualisée sur l'indicateur 10.

Cette organisation de moyens est mise à profit pour calculer la position géographique d'un but B ou objectif, repéré dans la zone surveillée ZS au moyen de l'image IV, et en utilisant un point de repère A appelé amer qui apparaît à la fois sur l'image visualisée IV et que l'on distingue également sur la carte CG. Ce point est choisi par l'opérateur et sa position géographique en latitude et en longitude est connue comme pour n'importe quel point de la carte CG.

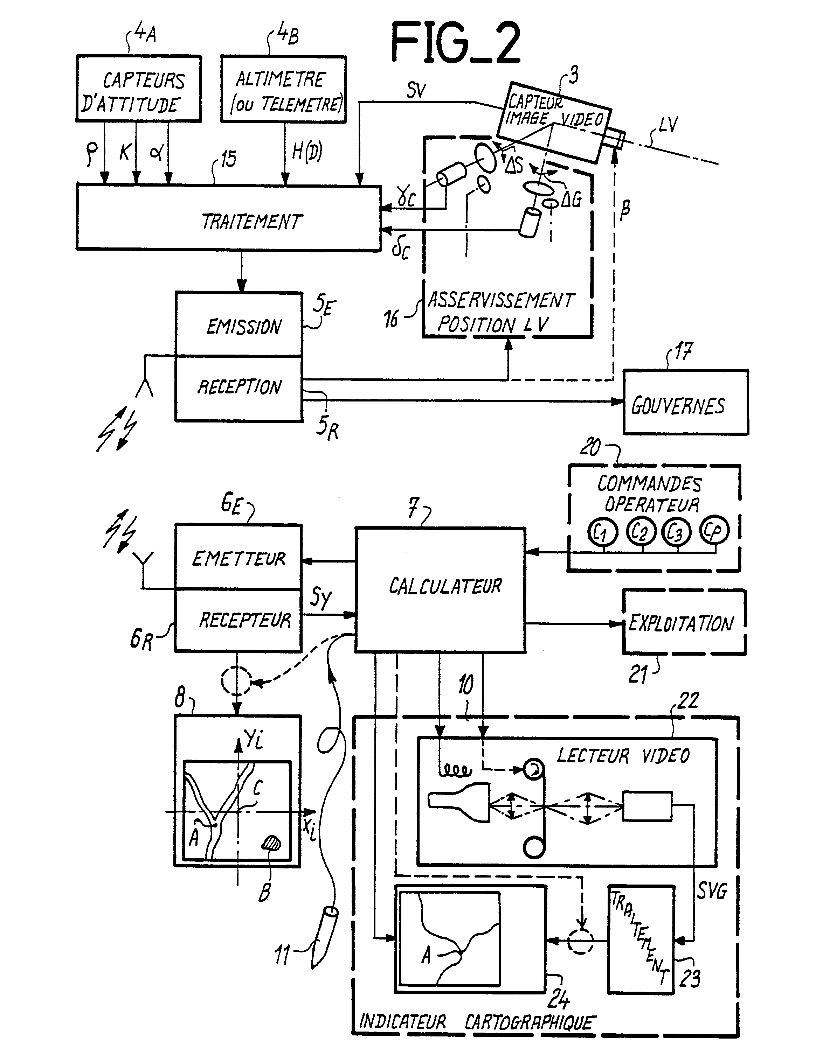

Sur la Fig. 2, on distingue ces mêmes éléments avec quelques détails montrant sur le drone les capteurs d'attitude proprement dits 4A qui fournissent les informations de roulis $\rho$, de cap K et d'assiette $\alpha$, et un capteur altimètre ou télémètre 4B pour fournir le paramètre altitude H ou la distance d'éloignement D du drone au sol le long de la ligne de visée élevée. Ces paramètres sont transmis à travers une unité de traitement 15. Cette unité reçoit également dans le cas représenté d'un capteur d'image 3 orientable en site et en gisement, les angles correspondants de capteurs angulaires disposés dans un circuit d'asservissement de position 16 de la ligne de visée LV.

Le circuit de traitement reçoit en outre, le signal vidéo SV détecté, ce signal incluant également les signaux de synchronisation d'image, tels que les signaux de synchronisation ligne et trame dans le cas d'une caméra de télévision. Les signaux reçus par le drone comportent : la télécommande de vol du drone appliquée à des gouvernes 17 ; la commande de position de la ligne de visée appliquée au circuit d'asservissement 16 ; et, le cas échéant, une commande de champ appliquée à la caméra pour faire varier l'angle de champ $\beta$.

Cette commande $\beta$ peut agir sur un diaphragme réglable et la valeur de champ pourra être détectée par un capteur et retransmise également vers la station. Dans une version plus simple, on pourra avoir simplement deux valeurs de champ appliquées à un diaphragme, un état correspondant à un grand champ et un état correspondant à une ouverture petit champ. Dans ce cas, les valeurs de champ sont connues au préalable et peuvent être déjà être incluses dans une mémoire du calculateur, et il n'est pas nécessaire de les retransmettre.

Les valeurs de site et de gisement de la position de la ligne de visée sont relatives à un repère Ra de référence lié au drone.

Du côté de la station, on distingue les diverses commandes opérateur, des commandes C1 pour la télécommande de vol, des commandes C2 pour la direction de la ligne de visée, et des commandes C3 pour le champ d'observation. L'ensemble est regroupé dans un circuit de commande d'opérateur 20.

Le circuit 21 représente le circuit d'exploitation qui reçoit le signal à utiliser provenant du calculateur, par exemple les données de localisation d'un objectif pour effectuer un tir.

Selon une réalisation préférée, les dispositifs de visualisation 8 et 10 comportent des écrans de moniteurs de télévision. Dans le cas de l'indicateur cartographique, on pourra avoir un lecteur vidéo qui effectue le prélèvement d'informations de carte stockées sur un film au moyen d'un balayage par tube d'analyse à spot mobile. Le signal détecté fourni en sortie du lecteur 22 est appliqué éventuellement à un circuit de traitement intermédiaire 23 avant d'être visualisé sur un indicateur cathodique 24. Le calculateur commande le balayage du tube d'analyse du lecteur ainsi que du moniteur 24 de visualisation. Un indicateur cartographique de ce genre est décrit dans les documents de brevet français 2 357 022 et 2 504 673.

On considère maintenant la procédure utilisée pour localiser un objectif.

Cette procédure comporte une phase préliminaire pour le repérage et l'acquisition de l'objectif. Après son lancement, le drone se place éventuellement sur une orbite d'attente ; il est à la disposition de l'opérateur qui peut le guider par télécommande depuis la station au sol pour le diriger vers la zone que l'on désire observer. On fait survoler alors la zone intéressante à basse altitude, environ 1 000 mètres, et le drone 1 retransmet vers la station 2 l'image détectée par la caméra embarquée. L'opérateur dispose devant lui des deux moniteurs 8 et 10, le premier 8 représentant l'image IV émise par le drone, le second lui fournissant une carte CG de la région survolée, à une certaine échelle.

La phase opérationnelle suivante a lieu dès que l'opérateur a repéré et identifié l'objectif ou but B sur l'image visualisée. En fait, si l'on dispose d'une caméra munie d'un zoom, lors de la phase de détection préliminaire, l'opérateur travaillera avec un champ large. Dès qu'il aura repéré l'objectif il procède à la reconnaissance de cet objectif en réduisant le champ de la caméra, puis il repasse à nouveau en champ large pour repérer un amer dans l'image visualisée. Il observe également l'emplacement de cet amer sur la carte CG. L'opérateur désigne alors successivement l'amer A, puis l'objectif B, avec le moyen de désignation 11, tel un crayon optique, sur l'écran du moniteur 8 ; ensuite il désigne l'amer sur la carte présentée par l'indicateur 10.

Après les désignations effectuées par l'opérateur le calculateur effectue des calculs préprogrammés, à partir des signaux retransmis par le crayon optique lors de ces désignations d'amer et d'objectif. Ces calculs comprennent essentiellement la mesure du décalage des points images A et B par rapport au centre C de l'écran correspondant à la ligne de visée ; la mesure ensuite, à partir de ces valeurs de décalage et des paramètres relatifs au drone et à la ligne de visée, des écarts au sol entre l'amer A et l'objectif B ; et enfin, le calcul de la position géographique de l'objectif B au sol à partir des écarts précédents et étant donné que la longitude et la latitude de l'amer A peuvent être aisément déterminées à partir des informations topographiques de la carte géographique et des coordonnées de l'amer dans cette carte.

Dans le cas d'une application à un système de tir, on peut procéder ensuite à une phase d'exploitation constituant la phase de tir proprement dite, le système de surveillance permettant, en outre de vérifier que le but est atteint ou de fournir des corrections de tir.

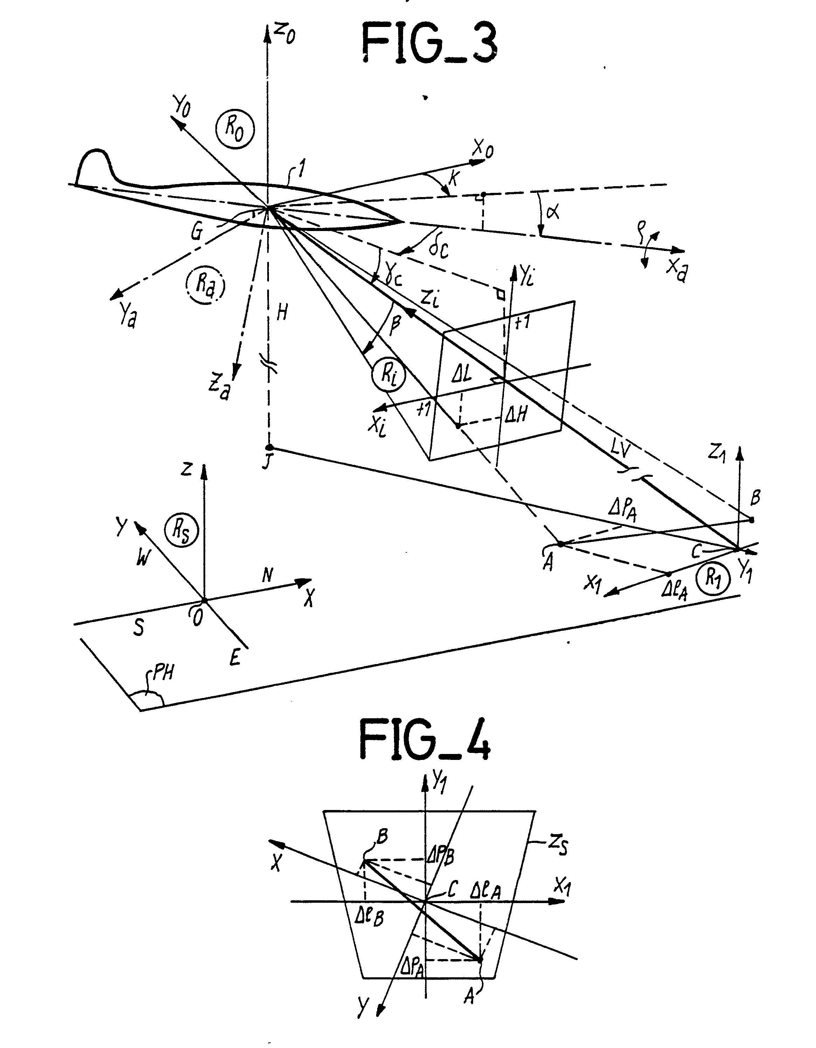

Si l'on se reporte maintenant à la Fig. 3, on y voit différents repères de référence et paramètres permettant d'effectuer les calculs.

Un premier trièdre de référence O XYZ, constitue le repère au sol Rs, le point O symbolisant la station et la direction X étant par exemple dirigée du sud vers le nord, et la direction Y de l'est vers l'ouest, ces directions étant situées dans un plan horizontal et la direction Z étant la verticale ascendante en O. Pour passer au repère avion ou drone Ra, on passe tout d'abord par un repère de référence intermédiaire Ro constitué des axes Xo, Yo, Zo qui passent par le centre de gravité G du drone. Le repère Ro est le même que le repère sol Rs mais translaté au point G. Le repère Ra est également centré au centre de gravité G et ses axes sont orientés : l'axe Xa selon l'axe longitudinal de l'avion et orienté positivement vers l'avant ; l'axe Za dans le plan de symétrie de l'avion orienté vers la bas ; et l'axe Ya pour obtenir un trièdre orthonormé direct. On peut alors définir les paramètres d'attitude de l'avion : l'assiette $\alpha$ constituée par l'angle entre le plan horizontal Xo, Yo et le vecteur Xa ; le cap K qui est l'angle que fait le vecteur Xo avec la projection de Xa sur le plan Xo, Yo ; et le roulis $\rho$ qui est l'angle de rotation présenté autour de la direction Xa par le drone. En ce qui concerne la ligne de visée et en ce qui concerne les calculs, on suppose que l'origine de cette ligne est confondue avec le centre de gravité G du drone. L'erreur commise est très faible étant donné le décalage par rapport à ce point dans la réalité, décalage qui est infime comparativement à la longueur de la ligne de visée GC qui est supérieure à 1 000 mètres, le point C représentant le point où cette ligne élevée atteint le sol. La ligne de visée est repérée par un angle de site $\gamma c$ et un angle de gisement $\delta c$, ces angles étant mesurés dans le repère drone Ra comme représenté sur la figure. La caméra a un angle de champ de $2\beta$ ; la valeur $\beta$ correspond à la demi-diagonale compte-tenu de la forme généralement rectangulaire du détecteur d'image. L'image détectée dans le plan de détection est perpendiculaire à la ligne de visée et le repère Ri associé à une image comporte un axe Xi dirigé vers la droite et un axe Yi dirigé vers le haut et l'axe Zi dirigé vers l'observateur. Le centre de l'image visualisée correspond à la trace de l'axe de visée LV. Le moniteur 8 retranscrit l'image enregistrée par la caméra 3. Par conséquent, tout se passe comme si l'opérateur observait les projections du sol sur un plan perpendiculaire à une ligne de visée et donc, on peut considérer le centre de l'image comme un point de la ligne de visée, cet artifice permettant de passer aisément des repères Ro et Ra au repère Ri.

Une première phase de calcul est celui des angles de site et de gisement d'un point désigné sur l'écran 8, en fonction des décalages écran. On appelle décalage écran d'un point ses coordonnées dans le repère Xi, Yi, sachant que les unités sont telles que le coin supérieur droit de l'écran à pour décalage + 1 et + 1. On note $\Delta H$ le décalage verticale suivant Yi, et $\Delta L$ le décalage horizontal suivant Xi. Ces décalages écran sont mesurés selon des techniques connues par mesure du temps de balayage qui s'écoule entre le moment où le signal est détecté par le crayon optoélectrique 11 et les synchronisations d'image. Les valeurs site et gisement du point désigné sont données en fonction de ses décalages écran $\Delta L$ et $\Delta H$, ainsi qu'en fonction des paramètres site $\gamma c$ et gisement $\delta c$ de la ligne de visée et de la valeur de champ $\beta$, selon les relations qui suivent (indicées à titre d'exemple pour le point A) :

$$\delta_A = \delta c - \text{Arcsin} \frac{4 \Delta L_A \, \text{tg} \, \beta}{[(4 \Delta L_A \, \text{tg} \, \beta)^2 + (3 \Delta H_A \, \text{tg} \, \beta \sin \gamma c - 5 \cos \gamma c)^2]^{1/2}}$$

$$\gamma_A = \text{Arctg} \frac{3 \Delta H_A \, \text{tg} \, \beta \cos \gamma c + 5 \sin \gamma c}{[(4 \Delta L_A \, \text{tg} \, \beta)^2 + (3 \Delta H_A \, \text{tg} \, \beta \sin \gamma c - 5 \cos \gamma c)^2]^{1/2}}$$

Ces calculs ayant été effectués pour l'amer A, on effectue ensuite les mêmes calculs pour l'objectif B à partir des décalages écran $\Delta L_B$ et $\Delta H_B$.

La phase de calcul suivante est celle des écarts au sol en fonction des angles de site et de gisement précités et des paramètres d'attitude du drone. On suppose que le sol est plan et l'on désigne par H l'altitude GJ du drone ou par D la distance GC du drone au centre de l'image au sol indiqué par le point C. Un nouveau repère au sol est formé par les directions YI et XI correspondant aux projections des axes Yi et Xi, et la direction Zi qui forme avec XI et YI un trièdre orthonormé. Les écarts selon ces axes sont notés $\Delta P$ selon YI correspondnt à la projection de $\Delta H$, c'est l'écart en profondeur ; l'écart latéral selon la direction XI à pour valeur $\Delta l$ correspondant à la projection de $\Delta L$. Il est entendu que par projections on entend les projections selon des directions issues du centre de gravité G. On se rend bien compte que les valeurs $\Delta P$ et $\Delta l$ sont fonction du positionnement relatif des référentiels Ri, Ra et Ro et en conséquence, dépendent des paramètres d'attitude du drone et de la position par rapport au drone de la ligne de visée LV. Il en résulte que le calcul de ces écarts au sol $\Delta P$ et $\Delta l$ fait intervenir ces paramètres, ainsi que les valeurs précédemment calculées de site et de gisement du point désigné dans l'image. Les formules correspondant à ces calculs ne sont pas reportées ici car leur écriture est relativement complexe, mais elles font intervenir des relations bien connues de passage d'un repère dans un autre par translation et rotation. Ainsi par exemple, les rotations de valeur K, $\alpha$ et $\rho$ permettent de passer du repère avion Ra au repère Ro et la translation GC, du repère Ro au repère correspondant centré en C dont les axes X et Y sont représentés sur la Fig. 4.

A partir des écarts $\Delta P_A$ et $\Delta I_A$ du point A et $\Delta P_B$ et $\Delta I_B$ du point B, on peut calculer aisément les projections de la ligne AB le long des directions YI et XI (Fig. 4) (c'est-à-dire $\Delta I_A - \Delta I_B$ et $\Delta P_B - \Delta P_A$ dans le cas de figure) et en déduire les écarts en latitude et en longitude entre l'amer et l'objectif, écarts à mesurer le long des directions de référence X et Y. En appelant u la rotation qu'il faut effectuer pour passer du système XI, YI au sol au système XY reporté en C, si l'on note $\Delta$lat et $\Delta$long les écarts en latitude et en longitude respectivement entre l'objectif et l'amer on obtient ces valeurs par les formules :

$$\Delta \text{lat} = \Delta P \cos u - \Delta L \sin u$$
$$\Delta \text{long} = \Delta P \sin u + \Delta L \cos u.$$

La valeur de l'angle u est déduite des données d'attitude du drone et de la direction de la ligne LV.

En considérant que la latitude et la longitude de l'amer A sont connues on en déduit aisément, avec ces valeurs d'écart, la longitude et la latitude du point B constituant l'objectif. La connaissance de la position géographique du point A se déduit aisément de la carte géographique projetée dont on connaît l'échelle et la situation d'au moins un point, par exemple le centre de cette carte en longitude et en latitude. La mesure de l'écart de l'amer par rapport à ce centre permet avec l'échelle de calculer aisément la latitude et la longitude de l'amer.

Dans l'exemple de réalisation précité et en se reportant aux brevets déjà indiqués, la carte est reproduite sur le film par des images successives dont les coordonnées du centre sont géographiquement connues ; la visualisation s'effectue sur le moniteur 24 et l'on peut avec le crayon 11, comme dans le cas de l'indicateur 8, obtenir par une mesure de temps le décalage de l'amer désigné A et le centre de la carte visualisée. Connaissant la position du centre, l'échelle et le taux de grandissement, on en déduit la position exacte de l'amer A.

Dans le concept d'une visualisation du type télévision de l'image IV et de la carte CG, pour le bon fonctionnement du système, il y a lieu de synchroniser les deux images, ce qui est effectué aisément par la synchronisation SY récupérée dans le signal vidéo transmis au niveau du récepteur 6R, cette synchronisation d'image étant expédiée à travers le calculateur au système indicateur cartographique 10, notamment pour le balayage ligne par ligne du moniteur 24. Lorsque l'opérateur présente ensuite le crayon optique 11 en un point de l'image IV, ou de la carte CG, et qu'il le valide, une impulsion est transmise lors des passages du faisceau du balayage cathodique au niveau du crayon optique, permettant d'obtenir un temps de mesure par rapport aux signaux de synchronisation SY. Ce temps est converti par le calculateur en coordonnées dans l'écran. Cet écart sur écran est transformé ensuite en écart sur le terrain par projection de l'écran sur la zone observée ZS. La zone observée a des caractéristiques qui dépendent du cap, du roulis et de l'assiette du drone, de la direction de la ligne de visée, du champ d'observation et de l'altitude par rapport au sol du drone ou bien de sa distance au centre de la zone observée. Ces paramètres définissent d'ailleurs la forme géométrique et les dimensions de la zone ZS observée au sol. L'écart mesuré sur l'écran et projeté sur cette zone au sol se traduit en écart en longitude et latitude entre l'amer et l'objectif et permet donc d'obtenir les coordonnées de l'objectif.

Le couplage que l'on peut effectuer à travers l'ensemble de calcul 7 entre l'image IV reçue et la cartographie électronique CG en 24 permet d'envisager d'autres fonctions.

Le pointage uniquement d'un amer A sur les deux écrans IV et CG permet de localiser le drone lui-même dans l'espace, comme représenté sur la Fig. 5, à partir du moment où, dans le triangle rectangle GAJ on connaît le côté GJ donné par l'altitude H (ou $D \sin \gamma_C$) et l'angle GAJ correspondant au site de la direction GA par rapport au repère sol. Cette valeur est fonction du site $\gamma_A$ par rapport au repère Ra et des rotations, dues à l'attitude de l'avion, à effectuer pour passer de Ra à Rs. Les coordonnées géographiques du point A étant connues, on connaît alors la direction spatiale AG et la position du point G sur cette direction, c'est-à-dire la position du drone à l'instant considéré. Cette opération autorise des recalages de navigation, procédure qui peut être utilisée lors de la phase préliminaire au cours de laquelle on effectue la télécommande du drone pour l'amener à survoler la zone d'intérêt. Cette procédure peut également être utilisée pour assurer le suivi par le système de cartographie 10 des zones survolées par le drone (passage d'une image à une autre par défilement du film dans le lecteur vidéo 22).

En effectuant deux pointages successifs et suffisamment espacés dans le temps, on peut déterminer la direction de déplacement de l'objectif, en considérant qu'il s'agit d'un objectif mobile, et calculer ensuite sa vitesse de déplacement. Ceci est illustré à l'aide de la Fig. 6 où A représente l'amer, B1 la position calculée de l'objectif à un instant donné, B2 sa position à un autre instant la direction B1, B2 donne la direction de déplacement et l'intervalle de temps séparant les deux mesures sert à calculer la vitesse. Dans cette configuration, on a représenté par un cercle la zone d'incertitude due aux erreurs de mesure, ce qui donne un angle d'erreur $\varepsilon$ dans laquel doit être envisagé la direction de déplacement de la cible.

Suivant la même procédure, par deux pointages successifs et suffisamment espacés dans le temps, on peut tout aussi bien déterminer la route présentée par le drone par rapport au sol et sa vitesse par rapport au sol. Connaissant la route par rapport au sol, le cap, la vitesse par rapport au sol et la vitesse propre du drone (par un capteur installé à bord du drone par exemple, tel un capteur d'incidence), on peut en déduire la valeur moyenne de la direction de la vitesse du vent dans la région survolée.

On notera également que dans le cas d'une application à un système de tir la projection de l'image de la zone observée sur l'écran permet de visualiser le tir et suivant la procédure déjà décrite précédemment pour l'objectif on pourra tout aussi bien désigner l'impact de tir pour fournir à l'artillerie des écarts par rapport à l'objectif et effectuer ainsi les corrections de tir nécessaires.

Pour la mise en œuvre de ces différentes procédures, on peut considérer que l'opérateur dispose de multipes commandes. En dehors des commndes C1 et C3 déjà signalées, on peut considérer une commande de programme CP destinée à indiquer au calculateur quelle est la procédure de calcul à utiliser : localisation de l'objectif, localisation du drone, conduite de tir, etc..., selon les différentes options précitées.

Parmi les variantes envisageables, on peut considérer que le crayon optique est remplacé par une fenêtre électronique, ou plutôt une mire incrustée dans l'image sous forme d'une croix avec un trait vertical et un trait horizontal, cette mire étant déplacée par une commande d'opérateur, via le calculateur, pour désigner les points successifs sur les visualisations 8 et 10. Cette méthode paraît cependant moins rapide que celle du crayon électronique. On peut également considérer une forme de réalisation d'indicateur cartographique différente, telle qu'une carte disposée sur une table traçante, mais cette solution paraît moins intéressante étant donné l'encombrement et la nécessité de disposer de l'ensemble des cartes à la place d'un film monté dans un boîtier et défilant sur des bobines.

On citera encore, à titre indicatif, que des corrections sont à effectuer pour tenir compte de l'altitude moyenne de la zone survolée ; deux solutions sont possibles, soit ces données sont fournies au calculateur au préalable ou au moment du survol de la zone, selon que cette zone est connue à l'avance ou non, soit cette information d'altitude est détectée lors de la lecture vidéo si la carte portée par le film est codée en fonction de l'altitude.

**Revendications**

1. Système de surveillance par drone permettant la localisation d'objectif comportant :

— ledit drone (1), équipé d'un capteur vidéo d'image (3) pour détecter l'image d'une zone obervée (Z$_s$), de dispositifs détecteurs (4) pour mesurer les paramètres définissant l'attitude (ρ, K, α) du drone son altitude (H) et la position de la ligne de visée (LV) du capteur d'image, et de moyens d'émission-réception (5) pour transmettre des données correspondant à cette image et à ces paramètres et pour recevoir des données relatives à la navigation du drone ;

— une station (2) équipée de moyens d'émission-réception (6) pour communiquer avec le drone (1), d'un dispositif de visualisation (8) de l'image vidéo (IV) transmise d'un dispositif indicateur cartographique (10) pour représenter une carte géographique (CG) incluant la région survolée et observée par le capteur d'image (3), et de moyens de calcul (7) utilisés pour le calcul de la position géographique d'un objectif (B) en procédant au choix sur la représentation de carte géographique (CG) d'un point de repère (A), dit amer, également apparent sur l'image visualisée (IV), ceci après identification préalable de l'objectif (B) dans cette image, un moyen de désignation (11) étant prévu pour désigner successivement, sur l'image visualisée (IV) l'amer (A) puis l'objectif (B), ensuite sur la carte géographique l'amer (A), les calculs de localisation de l'objectif (B) comportant les étapes principales suivantes :

— l'évaluation du site et du gisement de l'amer (A), puis de l'objectif (B), par rapport à un repère (Ra) lié au drone (1) en fonction desdits paramètres d'attitude du drone et de position de la ligne de visée (LV) du capteur d'image, et de la mesure des coordonnées du point désigné dans l'image visualisée ;

— le calcul des écarts au sol en profondeur et latéralement entre l'amer (A) et l'objectif (B) en fonction des évaluations précédentes et de la position spatiale de la ligne de visée ; et

— le calcul de la longitude et de la latitude de l'objectif (B) à partir des écarts précédents, et compte-tenu que la position de l'amer est déterminée à partir des informations topographiques de la carte géographique et des coordonnées de ce point dans la carte présentée, ladite station comportant, en outre, des moyens de commande (20) coopérant avec lesdits moyens de calcul (7) et d'émission-réception (6E, 6R) pour émettre des données de télécommande relatives à la visée (LV) dudit capteur d'image.

2. Système selon la revendication 1, dans lequel le procédé de localisation mis en œuvre comporte une phase préliminaire incluant le lancement du drone (1), son guidage par télécommande depuis la station au sol vers la zone (ZS) à observer, la retransmission de l'image vidéo et sa visualisation, caractérisé en ce que la visualisation de l'image vidéo est utilisée pour y repérer l'objectif et que la phase opérationnelle suivante comporte les étapes successives :

— dès repérage et identification de l'objectif (B), recherche par l'opérateur d'un amer (A) sur l'image visualisée (IV) et identification du même amer sur la carte géographique (CG) ;

— désignation successive de l'amer et de l'objectif sur l'image visualisée ;

— désignation de l'amer sur la carte géographique ;

— dès désignation par l'opérateur d'un point de l'image visualisée, calcul des coordonnées de ce point par rapport au centre de l'écran représentant la ligne de visée, par comptage de temps vis-à-vis d'instants référence donnés par la synchronisation de balayage ;

— calcul des angles site et gisement des points désignés en fonction desdites coordonnées et en faisant intervenir les paramètres de position de la ligne de visée (LV) du capteur d'image et la valeur (β) du champ d'observation, le site et le gisement étant mesurés par rapport à un repère (Ra) lié au drone ;

— calcul des écarts au sol en fonction des angles de site et de gisement précités et des paramètres d'attitude du drone, de son altitude et de la position de la ligne de visée du capteur d'image ;

— calcul des écarts en latitude et en longitude entre l'amer désigné et l'objectif, en fonction des écarts au sol et d'une rotation (u) à intervenir pour passer à un repère de référence lié au sol ;

— calcul de la longitude et de la latitude de l'amer en fonction de données de la carte géographique présentée ;

— calcul en fonction de la position de l'amer et des écarts en latitude et en longitude précités de la position géographique en latitude et en longitude de l'objectif.

3. Système selon la revendication 1 ou 2, caractérisé en ce que dans le cas d'un objectif mobile et d'une station fixe, en renouvelant au moins une fois le processus de désignation de l'objectif et en comparant les localisations successives calculées de l'objectif par rapport à l'amer, on détermine en sus par le calcul la direction et la vitesse de déplacement au sol de l'objectif.

4. Système selon la revendication 1 ou 2, caractérisé en ce qu'au cours de la période de vol préalable à l'identification de l'objectif la localisation spatiale du drone est obtenue en repérant un point amer commun sur l'image et sur la carte, en le désignant et en calculant le site et le gisement de la direction partant du drone et aboutissant à ce point, la localisation du drone résultant de la connaissance de son altitude et de la position géographique de l'amer, ladite localisation pouvant être utilisée à des fins de recalage de navigation et de suivi des zones survolées.

5. Système selon la revendication 4, caractérisé en ce qu'en renouvelant au moins une fois le processus de désignation de l'amer, et en comparant les localisations spatiales successives calculées du drone, on détermine par le calcul la route et la vitesse par rapport au sol du drone.

6. Système selon l'une quelconque des revendications 1 à 5 caractérisé en ce que le capteur vidéo d'image (3) est orientable (16) en site et en gisement par télécommande à partir de la station.

7. Système selon l'une quelconque des revendications 1 à 6, caractérisé en ce que le champ d'observation (β) est réglable par télécommande.

8. Système selon l'une quelconque des revendications précédentes, caractérisé en ce que le capteur vidéo d'image (3) est une caméra de télévision et les dispositifs de visualisation d'image (8) et de carte (10) sont constitués par des moniteurs de télévision, ledit moyen de désignation étant lui-même constitué par un crayon optique (11).

9. Système selon l'une quelconque des revendications précédentes, caractérisé en ce que l'indicateur cartographique comporte un lecteur vidéo (22) dans lequel la carte est stockée sur un film et analysée point par point au moyen d'un tube analyseur à spot mobile, la visualisation étant du type télévision.

10. Système selon l'ensemble des revendications 1 à 7, caractérisé en ce que l'opérateur dispose de moyens de commande (20) pour télécommander le vol du drone, l'orientation du capteur vidéo d'image et l'ouverture du champ d'observation, ainsi que pour désigner aux moyens de calcul le processus d'exploitation à utiliser.

11. Système selon l'une quelconque des revendications précédentes, caractérisé en ce que lesdits dispositifs détecteurs comportent des capteurs d'attitude (4A) pour la mesure du roulis, du cap et de l'assiette du drone, un altimètre (4B) pour la mesure de l'altitude ou un télémètre pour la mesure de la distance drone/sol le long de la ligne de visée, ainsi que des capteurs de position en site et en gisement de la ligne de visée (LV) dans le cas d'un capteur orientable pour mesurer la position de cette ligne par rapport au repère de référence (Ra) lié au drone.

12. Système selon l'une quelconque des revendications 1 à 11, utilisé pour constituer un système de tir, caractérisé en ce que la procédure de localisation d'objectif est transposée au niveau de l'impact du tir visualisé sur l'image de la zone observée en sorte de calculer les corrections de tir à effectuer.

**Claims**

1. A surveillance system implying a drone permitting the localization of a target, comprising :
— said drone (1), equipped with a video image pick-up (3) for detecting the image of an observed zone ($Z_s$), detection devives (4) for measuring the parameters defining the attitude ($\rho$, K, $\alpha$) of the drone, its altitude (H) and the position of the sighting line (LV) of the image pick-up, and transmitter-receiver means (5) for transmitting data corresponding to the image and to its parameters and for receiving data relative to navigation of the drone ;
— a station (2) equipped with transmitter-receiver means (6) for communication with the drone (1), with a display device (8) for the transmitted video-image (IV), with a cartographic indicator device (10) for representing a geographic map (CG) including the region flown over and observed by the image pick-up (3), and computation means (7) used for computing the geographic position of a target (B), by selecting in the representation of the geographic map (CG) a reference point (A), termed landmark, also visible on the displayed image (IV), and doing so after having identified the target (B) in that image, a designation means (11) being provided for designating successively, in the displayed image (IV) the landmark (A), then the target (B) and then the landmark (A) in the geographic map, the computations for the localization of the target (B) comprising the following main steps :
— the angle of the elevation and of the azimuth of the landmark (A), then of the target (B), in relation to a reference point (Ra) associated with the drone (1) as a function of said attitude parameters of the drone and the position of the sighting line (LV) of the image pick-up, and of the measurement of the coordinates of the point designated in the displayed image ;
— the computation of the deviations on ground between the landmark (A) and the target (B) as to the depth and laterally, as a function of the preceding evaluations and of the spatial position of the sighting line ; and
— the computation of the longitude and the latitude of the target (B) based on the preceding deviations and taking into account the fact that the position of the landmark is determined on the basis of the topographical informations of the geographic map and of the coordinates of that point in the presented map, said station comprising in addition control means (20) which cooperate with said computation means (7) and the transmitter-receiver means (6E, 6R) for retransmitting remote control data relative to the sighting device (LV) of said image pick-up.

2. A system according to claim 1, in which the applied localization process comprises a preliminary phase including the starting of the drone (1), its guidance by remote control means from the ground station towards the zone (ZS) to be observed, the retransmission of the video-image and its display, characterized in that the display of the video-image is used for marking therein the target, and that the next-following operational phase comprises the following steps :
— the target (B) being retrieved and identified, the operator searches for a landmark (A) in the displayed image (IV) and identifies the same landmark in the geographic map (CG) ;
— the landmark and the target in the displayed image are successively designated ;
— the landmark is designated in the geographic map ;
— a point in the displayed image being designated by the operator, the coordinates of that point are computed in relation to the center of the display screen representing the sighting line, by counting the time in comparison to instances of reference supplied by the scanning synchronization ;
— the angles of elevation and of azimuth of the designated points are computed as a function of said coordinates and of the parameters of the position of the sighting line (LV) of the image pick-up and of the value ($\beta$) of the observation field, the elevation and azimuth being measured in relation to a mark (Ra) associated with the drone ;

— the deviations on ground are computed as a function of the cited angles of elevation and of azimuth, and of the attitude parameters of the drone, its altitude and of the position of the sighting line of the image pick-up ;

— the deviations in latitude and in longitude between the designated landmark and the target are computed as a function of the deviations on ground and of a rotation (u) to intervene in order to pass to a mark of reference associated with the ground ;

— the longitude and the latitude of the landmark are computed as a function of the data of the presented geographic map ;

— the geographic position as to the latitude and the longitude of the target is computed as a function of the position of the landmark and of said deviations in latitude and in longitude.

3. A system according to claims 1 or 2, characterized in that in case of a moving target and a fixed station, the direction and the speed of displacement of the target on ground is determined in addition by computation, by repeating at least once the process of designation of the target and by comparing the successive, computed localization of target in relation to the land mark.

4. A system according to claim 1 or 2, characterized in that during the flight period prior to the identification of the target, the localization of the drone in space is obtained by retrieving a landmark common to the image and to the map, in designating the mark and in computing the elevation and the azimuth of the direction of a line beginning at the drone and ending at that mark, while the localization of the drone results from the knowledge of its altitude and of the geographic position of the landmark, said localization being used for readjusting the navigation and the tracking of zones flown over.

5. A system according to claim 4, characterized in that by repeating at least once the designation process for the landmark, and by comparing the successive computed localizations in space of the drone, the route and the speed of the drone in relation to the ground are determined by computation.

6. A system according to any one of the claims 1 to 5, characterized in that the video image pick-up (3) is adapted to change orientation (16) of elevation and azimuth by remote control of the station.

7. A system according to any one of the claims 1 to 6, characterized in that the observation field ($\beta$) is adjustable by remote control.

8. A system according to any one of the preceding claims, characterized in that the video image pick-up (3) is a television camera and the image display device (8) and the map display device (10) are constituted by television monitors, said designation means being an optical pencil (11).

9. A system according to any one of the preceding claims, characterized in that the cartographic indicator comprises a video reader (22), in which the map is stored on a film and is analysed point by point by means of a moving spot analyser tube, the display being of the television type.

10. A system according to all of the claims 1 to 7, characterized in that the operator disposes of control means (20) for remote controlling the flight of the drone, the orientation of the video image pick-up and the opening degree of the observation field, as well as for designating to the computation means the exploitation process to be adopted.

11. A system according to any one of the preceding claims, characterized in that said detector devices comprise attitude sensors (4A) for measuring the roll, course and trim of the drone, an altimeter (4B) for measuring the altitude or a distance meter for measuring the distance drone/ground along the sighting line, as well as position sensors relative to the elevation and the azimuth of the sighting line (LV) in case of a sensor adapted to point its direction itself for measuring the position of that line in relation to a reference mark (Ra) associated with the drone.

12. A system according to any one of the claims 1 to 11, used to constitute a shooting system, characterized in that the target localization process is transposed to the case of a shot impact displayed in the image of the observed zone so that the shooting corrections to be made are computed.

## Patentansprüche

1. Überwachungssystem mithilfe eines Dorhnenflugkörpers zur Ortsbestimmung eines Zieles, mit :

— der Drohne (1), die ausgestattet ist mit einem Videobildaufnehmer (3) zur Erfassung des Bildes einer beobachteten Zone ($Z_s$), Detektorvorrichtungen (4) zur Messung der die Fluglage ($\rho$, K, $\alpha$) der Drohne, ihre Höhe (H) und die Lage der Visierlinie (LV) des Bildaufnehmens bestimmenden Parameter, und Sende-Empfangsmitteln (5) zur Übertragung der dem Bild und den Parametern entsprechenden Daten, und zur Gewinnung von Angaben über die Flugbewegung der Drohne,

— einer mit Sende-Empfangsmitteln (6) ausgestatteten Station (2) zum Funkverkehr mit der Drohne (1), einer Anzeigevorrichtung (8) für das übertragene Videobild (IV), eine kartographische Anzeigevorrichtung (10) zur Darstellung einer Landkarte (CG), welche die überflogene und vom Bildaufnehmer (3) beobachtete Region einbezieht, und Rechenmittel (7) zur Berechnung der geographischen Position eines Zieles (B) durch Wahl eines Bezugspunktes (A), Landmarke genannt, die auf der dargestellten geographischen Karte und zugleich in dem angezeigten Bild erscheint, und zwar nach vorheriger Identifizierung des Zieles (B) in diesem Bild, wobei ein Markiermittel (11) vorgesehen ist, welches nacheinander auf dem angezeigten Bild (IV) die Landmarke (A), dann das Ziel (B) und anschliessend auf der Landkarte die Landmarke (A) anzeigt, wobei die Berechnungen der Lage des Zieles (B) folgende Hauptschnitte umfassen :

— Bestimmung von Elevation und Azimuth der Landmarke (A), anschließend des Zieles (B), in bezug auf einen auf die Drohne (1) bezogenen Fixpunkt (Ra) in Abhängigkeit von den Fluglageparametern der Drohne und der Lage der Visierlinie (LV) des Bildaufnehmers und der Koordinaten des im angezeigten Bild gekennzeichneten Punktes ;

— Berechnung der Abstände am Boden zwischen Drohne (A) und Ziel (B) bezüglich der Tiefe und der Seite in Abhängigkeit der vorherigen Bestimmungen und der Raumlage der Visierlinie ; und

— Berechnung der Längen- und Breitengradposition des Zieles (B) aus den vorgenannten Abständen und unter Berücksichtigung des Umstandes, daß die Lage der Landmarke aus topographischen Informationen der Landkarte und den Koordinaten dieses Punktes in der dargestellten Karte bestimmt wird, wobei die Station weiter Steuermittel (20) aufweist, die mit den Rechenmitteln (7) und den Sende-Empfangsmitteln (6E, 6R) zusammenwirken, um Fernsteuerbefehle bezüglich des Visiers (LV) des Bildaufnehmers auszusenden.

2. System nach Anspruch 1, in welchem das angewandte Ortsbestimmungsverfahren eine Vorphase umfaßt, die den Start der Drohne (1), deren Fernsteuerung von der Bodenstation zur Beobachtungszone (ZS) und die Rückübertragung des Videobildes und dessen Anzeige einschließt, dadurch gekennzeichnet, daß die Anzeige des Videobildes dazu benutzt wird, darin das Ziel zu lokalisieren, und daß die nächste operative Phase die aufeinanderfolgenden Schritte umfaßt :

— nach erfolgter Lokalisierung und Identifizierung des Zieles (B) sucht der Benutzer nach einer Landmarke (A) auf dem angezeigten Bild (IV) und identifizt dieselbe Marke auf der. Landkarte (CG) ;

— Bestimmung der Landmarke und dann des Zieles auf dem angezeigten Bild ;

— Kennzeichnung der Landmarke auf der Landkarte ;

— nach erfolgter Kennzeichnung eines Punktes auf dem angezeigten Bild druch den Benutzer werden die Koordinaten dieses Punktes in bezug auf das Bildschirmzentrum, das die Visierlinie repräsentiert, durch Zeitzählung gegenüber Bezugszeitpunkten berechnet, die aus der Abtastsynchronisation entnommen sind ;

— Berechnung der Elevations- und Azimuthwinkel der gekennzeichneten Punkte in Abhängigkeit von diesen Koordinaten und unter Einbeziehung der Lageparameter der Visierlinie des Bildaufnehmers (LV) und des Wertes (β) des Beobachtungsfeldes, wobei Elevation und Azimuth in bezug auf einen auf die Drohne bezogenen Fixpunkt (Ra) gemessen werden ;

— Berechnung der Abweichungen am Boden in Abhängigkeit von den genannten Elevations- und Azimuthwinkeln und den Fluglageparametern der Drohne, ihrer Flughöhe und der Lage der Visierlinie des Bildaufnehmers ;

— Berechnung der Abstände in Längen- und Breitenrichtung zwischen der gekennzeichneten Landmarke und dem Ziel in Abhängigkeit der Abstände am Boden und einer einzubeziehenden Rotation (u), um auf eine an den Erdboden gebundene Bezugsmarke überzugehen ;

— Berechnung der Längen- und Breitenposition der Landmarke in Abhängigkeit von Daten der dargestellten Landkarte ;

— Berechnung der geographischen Lage des Zieles in Längs- und Breitenrichtung in Abhängigkeit von der Lage der Landmarke und den vorerwähnten Breiten- und Längenabständen.

3. System nach Anspruch 1 oder 2, dadurch gekennzeichnet, daß im Falle eines beweglichen Zieles und einer ortsfesten Station zusätzliche die Richtung und die Geschwindigkeit des Zieles am Boden berechnet wird, und zwar durch mindestens einmalige Wiederholung des Verfahrens zur Kennzeichnung des Zieles und durch Vergleich der berechneten Folgestandorte des Zieles in bezug auf die Landmarke.

4. System nach Anspruch 1 oder 2, dadurch gekennzeichnet, daß im Verlauf der der Identifikation des Zieles vorausgehenden Flugphase die räumliche Ortsbestimmung der Drohne durch Ermittlung einer dem Bilde und der Karte gemeinsamen Landmarke erfolgt, durch ihre Kennzeichnung und durch Berechung der Elevation und des Azimuths der Richtung beginnend bei der Drohne und entend in diesem Punkt, wobei die Ortsbestimmung der Drohne aus der Kenntnis ihrer Flughöhe und der geographischen Lage der Landmarke erfolgt und dabei zur Nachregelung der Navigation und zur Verfolgung der überflogenen Zonen benutzt werden kann.

5. System nach Anspruch 4, dadurch gekennzeichnet, daß man durch mindestens einmaliges Wiederholen des Verfahrens zur Kennzeichnung der Landmarke und durch Vergleich aufeinanderfolgender, berechneter Raumstandorte der Drohne die Route und die Geschwindigkeit der Drohne über Grund berechnet.

6. System nach einem der Ansprüche 1 bis 5, dadurch gekennzeichnet, daß der Videobildaufnehmer (3) bezüglich der Elevation und des Azimuths durch Fernsteuerung von der Station aus einstellbar (16) ist.

7. System nach einem der Ansprüche 1 bis 6, dadurch gekennzeichnet, daß das Beobachtungsfeld (β) durch Fernsteuerung einstellbar ist.

8. System nach einem der vorhergehenden Ansprüche, dadurch gekennzeichnet, daß der Videobildaufnehmer (3) eine Fernsehkamera ist und die Bildanzeige- und Landkartenanzeigevorrichtungen (8) und (10) aus Fernsehmonitoren bestehen, wobei das Markiermittel ein optischer Stift (11) ist.

9. System nach einem der vorhergehenden Ansprüche, dadurch gekennzeichnet, daß der kartographische Anzeiger ein Videolesegerät (22) aufweist, in welchem die Karte auf einem Film gespeichert und Punkt für Punkt mit einer Bildabtaströhre mit beweglichem Lesespot analysiert wird, wobei die Anzeige mit Fernsehmitteln erfolgt.

10. System nach allen Ansprüchen 1 bis 7, dadurch gekennzeichnet, daß der Benutzer über Steuermittel (20) zur Fernsteuerung des Dorhnenfluges, zur Orientierung des Videobildaufnehmers und zur Öffnung des Beobachtungsfeldes sowie zur Bestimmung des zu benutzenden Auswertungsverfahrens in den Rechenmitteln verfügt.

11. System nach einem beliebigen der vorhergehendenm Ansprüche, dadurch gekennzeichnet, daß die gennanten Detektorvorrichtungen Fluglagenaufzeichner (4A) zur messung der Roll-, Kurs- und Trimmwerte der Drohne, einen Höhemmesser (4B) zur Messung der Flughöhe oder einen Entfernungsmesser zur Messung des Abstandes Drohne/Erdboden entlang der Visierlinie aufweisen sowie Positionsaufnehmer für Elevation und Azimuth der Visierlinie (LV) im Falle eines ausrichtbaren Aufnehmers zur Messung der Lage dieser Linie in bezug auf den die Drohne bezogenen Fixpunkt.

12. System nach einem der Ansprüche 1 bis 11, eingesetzt als Schießsystem, dadurch gekennzeichnet, daß das Verfahren zur Ortsbestimmung des Zieles auf den Geschoßeinschlag beim Schießen übertragen wird, der auf dem Bild der beobachteten Zone sichtbar gemacht wird, um die erforderlichen Schießkorrekturen zu berechnen.

FIG_1

0 148 704

FIG_5

FIG_6

FIG_2

0 148 704

FIG_3

FIG_4